# FASCICULE DE BREVET EUROPEEN

(11) **EP 1 116 465 B1**
(45) Date de publication et mention de la délivrance du brevet: **19.05.2004**
(21) Numéro de dépôt: 01420004.2
(22) Date de dépôt: 10.01.2001
(51) Int. Cl.: A47J 39/00

(54) **Dispositif pour le maintien au froid et la mise en temperature de plateaux-repas et installation mettant en oeuvre un tel dispostif**
Vorrichtung zum Kühlhalten und Erwärmen von Serviertabletts und Anlage zur Verwendung einer solchen Vorrichtung
Apparatus for keeping cold and heating meal-trays and installation for using such an apparatus

(30) Priorité: 10.01.2000 FR 0000236
(43) Date de publication de la demande: 18.07.2001
(73) Titulaire: Electro Alu, 63290 Chateldon (FR)
(72) Inventeur: Brossat, Pierre, 69006 Lyon (FR)
(74) Mandataire: Thibault, Jean-Marc

(56) Documents cités:
- DE-A- 2 347 512
- DE-U- 29 601 788
- FR-A- 2 383 637
- FR-A- 2 420 947
- FR-A- 2 442 035
- FR-A- 2 713 063

## Description

La présente invention concerne le domaine technique du transport et de la distribution de repas à l'aide de plateaux sur lesquels sont disposés des mets et divers ustensiles nécessaires à la consommation des aliments.

L'objet de l'invention trouve une application particulièrement avantageuse dans le domaine du transport et de la distribution de repas, par exemple en milieu hospitalier.

D'une manière habituelle, un plateau-repas est destiné à recevoir des mets froids et chauds placés dans des récipients adaptés à la nature des aliments. Selon le procédé, dit en liaison chaude, les mets chauds sont, dès leur préparation, acheminés et conservés à la température de consommation jusqu'au moment de leur distribution aux consommateurs.

Dans le procédé, dit en liaison froide, les mets chauds sont mis à la température de consommation juste avant leur distribution aux consommateurs, dans la mesure où il ont été rapidement refroidis dès la fin de leur préparation, en vue d'un stockage au froid pouvant atteindre plusieurs jours.

Il est connu, dans l'art antérieur, différentes solutions de chariots permettant le transport et la distribution de plateaux-repas. D'une manière générale, un tel chariot de transport et de distribution comporte, par exemple comme décrit par le brevet US 3 975 393, deux compartiments séparés dont l'un est destiné à recevoir les plateaux pourvus des ustensiles et des mets froids, tandis que l'autre reçoit les récipients contenant les mets chauds.

Le compartiment, dit chaud, est équipé de moyens de chauffage permettant de placer et de maintenir les denrées à leur température de consommation. Le compartiment, dit froid, est relié à une unité frigorifique embarquée comportant, généralement, un groupe compresseur, un condenseur et un évaporateur.

De tels chariots présentent l'inconvénient d'être particulièrement encombrants, lourds et coûteux, en raison notamment du montage d'unités de production de froid à l'intérieur de chaque chariot.

Pour tenter de résoudre ce problème, la demande de brevet EP 0 161 178 décrit une installation comportant un dispositif ou une borne fixe de production de froid et de chaud et sur lequel est destiné à être raccordé au moins un chariot isotherme de transport et de distribution de repas. La borne fixe comporte un premier compartiment incluant une source d'air froid susceptible de pulser l'air à l'intérieur du compartiment froid du chariot, lorsque ce dernier est accolé à la borne de production. Cette borne de production comporte un deuxième compartiment incluant des moyens de chauffage adaptés pour réchauffer les mets placés dans un compartiment chaud aménagé dans le chariot.

Une telle installation présente un inconvénient majeur, dans la mesure où elle impose de déplacer les mets devant être remis en température du compartiment froid dans le compartiment chaud.

Pour remédier à un tel inconvénient, le brevet FR 2 420 947 propose une installation de maintien au froid et de mise en température de mets placés sur des plateaux-repas, montés de manière superposée à l'intérieur d'un chariot. Cette installation comporte une borne fixe comportant une double série de doigts superposés à l'intérieur desquels circule un liquide caloporteur froid ou chaud. Lors du raccordement d'un chariot à une borne fixe, chacun des doigts est destiné à venir s'insérer à l'intérieur d'un logement aménagé dans un plateau-repas. Après l'engagement des doigts à l'intérieur des plateaux-repas, l'ensemble de ces derniers est abaissé par une commande permettant la mise en contact de ces doigts avec les récipients des mets, en vue d'assurer une bonne conductibilité thermique.

Une telle installation présente une difficulté majeure pour le positionnement du chariot par rapport à la borne fixe, dans la mesure où un tel raccordement impose l'engagement de la totalité des doigts à l'intérieur des plateaux-repas, ce qui nécessite un positionnement précis, d'une part, entre la borne et le chariot de transport et, d'autre part, des plateaux-repas à l'intérieur du chariot. De plus, les plateaux-repas utilisés nécessitent une réalisation spécifique de conception relativement onéreuse.

L'objet de l'invention vise donc à remédier aux inconvénients de la technique antérieure en proposant un dispositif pour le maintien au froid et la mise en température de plateaux-repas placés dans un chariot isotherme, le dispositif et le chariot étant de conception simple et permettant un raccordement sûr et efficace, tout en assurant une remise en température sans dispersion d'énergie.

Pour atteindre un tel objectif, l'objet de l'invention concerne un dispositif pour le maintien au froid et la mise en température de mets placés sur des plateaux-repas, le dispositif comportant :
- une structure porteuse délimitant au moins un logement de réception pour un chariot isotherme comportant une enveloppe isolante délimitant, intérieurement, une enceinte accessible par au moins une porte qui, en position ouverte, communique avec le logement, l'enceinte étant munie de moyens de support permettant le maintien en position superposée, de plateaux-repas,
- une source de production d'un air froid, adaptée pour, en présence d'un chariot isotherme, maintenir au froid les mets placés dans l'enceinte,
- des plaques chauffantes montées de manière superposée pour, en présence du chariot isotherme, mettre en température certains des mets placés dans l'enceinte,
- et des moyens de commande permettant de piloter le fonctionnement de la source de production d'air froid et des plaques chauffantes.

Selon l'invention, la structure porteuse supporte un équipage mobile verticalement comportant une paroi d'obturation destinée à fermer l'enceinte du chariot isotherme et équipée :
- des plaques chauffantes montées en porte-à-faux pour s'étendre dans l'enceinte du chariot,
- d'une série d'orifices reliés à la source de production d'air froid, réparties sur la paroi d'obturation pour déboucher entre les plateaux-repas dans l'enceinte,
- et d'un moyen de déplacement de l'équipage mobile permettant de le placer dans une première position autorisant l'amenée ou le retrait du chariot par rapport à la paroi de fermeture et, dans une seconde position, assurant la mise en contact de chaque plaque de chauffage avec le dessous du plateau-repas associé.

Un autre objet de l'invention concerne une installation pour le maintien du froid et la mise en température de mets placés sur des plateaux-repas comportant :
- au moins un dispositif conforme à l'invention,
- et au moins un chariot isotherme comportant une enveloppe isolante délimitant intérieurement une enceinte accessible par au moins une porte et munie de moyens de support permettant le maintien en position superposée de plateaux-repas.

Diverses autres caractéristiques ressortent de la description faite ci-dessous en référence aux dessins annexés qui montrent, à titre d'exemples non limitatifs, des formes de réalisation de l'objet de l'invention.

La **fig. 1** est une vue en perspective d'un exemple de réalisation d'un dispositif pour le maintien au froid et la mise en température.

La **fig. 2** est une vue en perspective montrant un dispositif sur lequel est raccordé un chariot isotherme.

La **fig. 3** est une vue partielle en perspective d'un exemple de réalisation d'un chariot de transport conforme à l'invention.

Les **fig. 4** et **5** sont des vues en perspective à grande échelle montrant un système de commande en déplacement de l'équipage mobile, respectivement en position inactive et active.

Les **fig. 6** et **7** sont des vues schématiques en coupe transversale d'un dispositif équipé d'un chariot et montrant l'équipage mobile, respectivement dans sa position inactive et active.

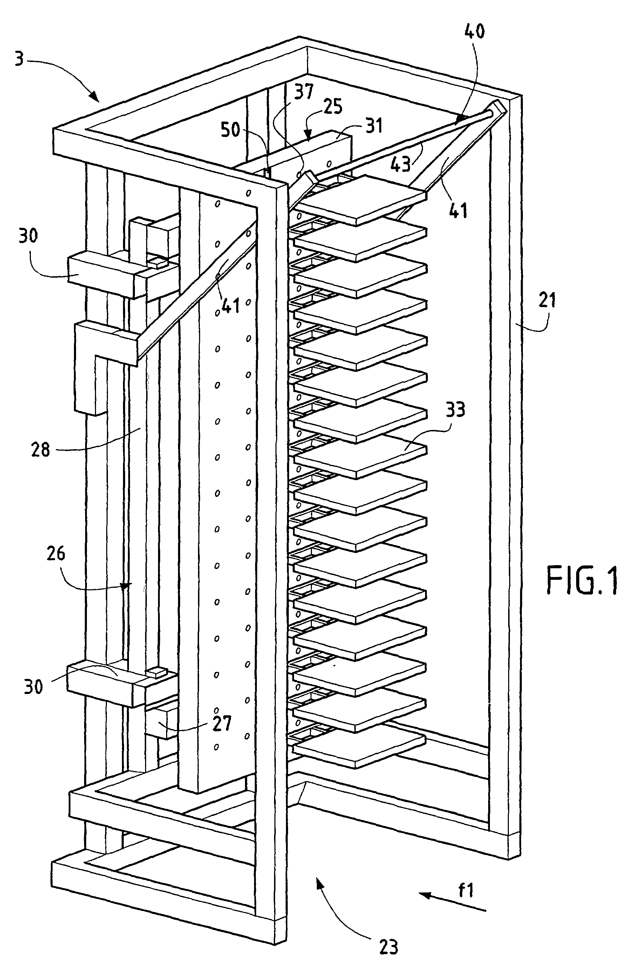

Tel que cela ressort plus précisément des **fig. 1** à **3,** l'objet de l'invention concerne une installation **1** adaptée pour assurer le maintien au froid et la mise en température de mets placés sur des plateaux-repas **2**. Cette installation **1** comporte un dispositif ou une borne généralement fixe **3** de production de froid et de chaud sur lequel est destiné à être raccordé au moins un chariot isotherme **4** de transport et de distribution des plateaux repas **2**.

Le chariot **4** comporte une enveloppe **5** isolante thermiquement, montée classiquement sur des roulettes **6**. L'enveloppe **5** délimite intérieurement une enceinte **7** accessible par au moins une porte **8**. De manière classique, l'enceinte **7** est munie de moyens **9** de support et de guidage des plateaux-repas **2**. Dans l'exemple illustré, les moyens de support et de guidage **9** sont formés par des rainures superposées, ménagées sur les parois de l'enveloppe **5** et dont leur nombre permet de fixer la capacité de stockage du chariot.

Selon une variante préférée de réalisation, le chariot de transport **4** est réalisé conformément au brevet FR 2 713 063. Selon cet exemple préféré de réalisation, le chariot **4** comporte, à l'intérieur de l'enceinte **7**, une cloison de séparation **11**, isolante thermiquement, s'étendant verticalement et délimitant, de part et d'autre, un compartiment dit froid **13** et un compartiment dit chaud **14**.

Un tel chariot **4** est destiné à recevoir, de préférence, un plateau-repas **2**, tel que décrit dans le brevet FR 2 713 063. Ainsi, un tel plateau-repas **2** comporte une fente **15** prolongée par une partie de liaison **16**, entre une zone **17** du plateau dite froide, réservée notamment aux mets froids, et une zone **18** du plateau dite chaude, réservée aux mets chauds. Les zones froides **17** des plateaux sont destinées à être placées dans le compartiment froid **13**, tandis que les zones chaudes **18** des plateaux sont placées dans le compartiment chaud **14**. Les dimensions de la fente **15** sont adaptées, de manière à permettre l'engagement de chaque plateau sur toute la longueur de la fente jusqu'à ce que la partie de liaison **16** vienne en butée contre la face frontale **11**_{**1**} de la cloison de séparation **11**.

De préférence, la cloison de séparation est aménagée pour comporter, sur sa face frontale **11**_{**1**}, des logements **19** superposés, adaptés pour recevoir chacun une partie de liaison **16** d'un plateau-repas.

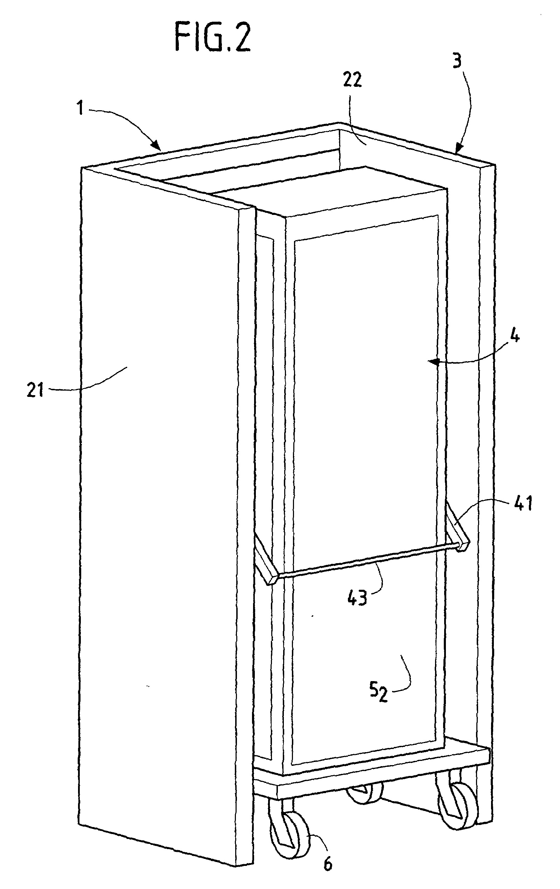

Conformément à l'invention, le dispositif **3** est constitué par l'intermédiaire d'un bâti ou d'une structure porteuse **21** aménagée pour délimiter au moins un logement **22** de réception pour un chariot isotherme **4**. Tel que cela apparaît plus précisément sur les **fig. 1** et **2,** la structure porteuse **21** présente ainsi, en section droite transversale, un profil général en forme de "C" délimitant le logement **22** qui s'ouvre par une face frontale **23** à partir de laquelle peut être engagé un chariot **4**.

Conformément à l'invention, la structure porteuse **21** comporte un équipage **25** mobile verticalement. Dans l'exemple de réalisation illustré, l'équipage mobile **25** comporte un cadre de support **26** constitué par deux traverses **27** reliées entre elles par deux coulisses **28** s'étendant verticalement et guidées en translation verticale par l'intermédiaire de glissières **30**. Ce cadre de support **26** est équipé d'une paroi ou cloison d'obturation **31** s'étendant verticalement et dont les dimensions sont adaptées pour fermer l'enceinte **7**, c'est-à-dire dans l'exemple illustré, les compartiments **13** et **14** d'un chariot **4**. Cette paroi d'obturation **31** délimite ainsi la partie arrière du logement de réception **22** et constitue une surface de butée pour le chariot **4** et, plus précisément, pour sa face avant **5**_{**1**} dans laquelle s'ouvrent les compartiments **13, 14**.

La paroi d'obturation **31** est équipée de plaques chauffantes **33** montées, de manière superposée, en porte-à-faux pour s'étendre chacune à l'intérieur du logement de réception **22** et, comme cela sera expliqué dans la suite de la description, en dessous de la zone chaude **18** de chaque plateau-repas **2**. Chaque plaque chauffante **33** est du type à résistance chauffante ou à induction. Le fonctionnement des plaques chauffantes **33** est piloté par l'intermédiaire de moyens de commande, non représentés mais connus en soi.

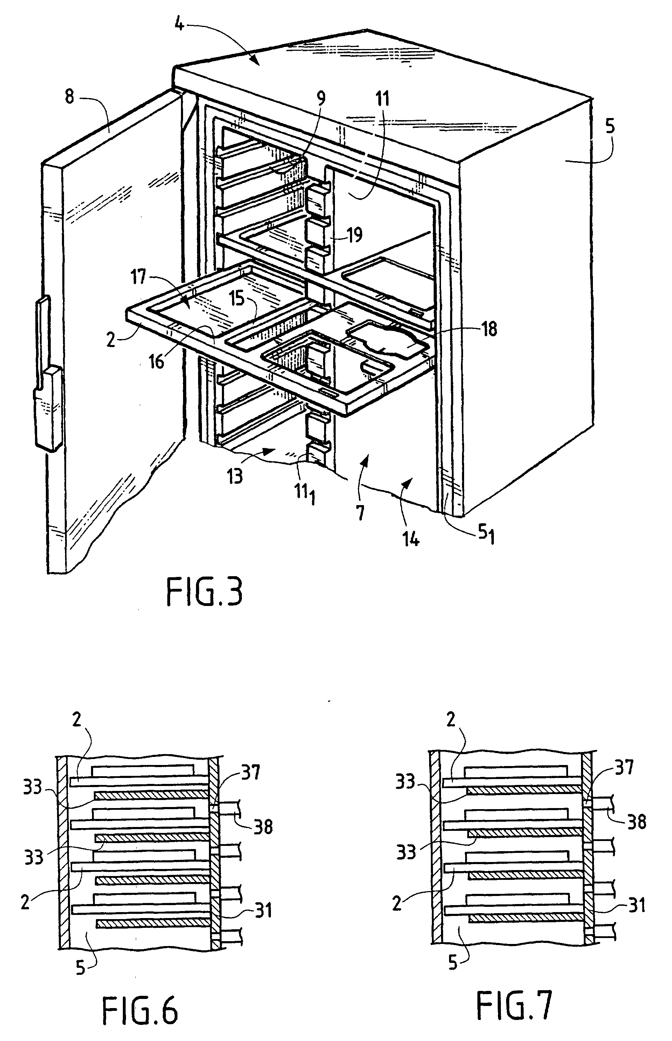

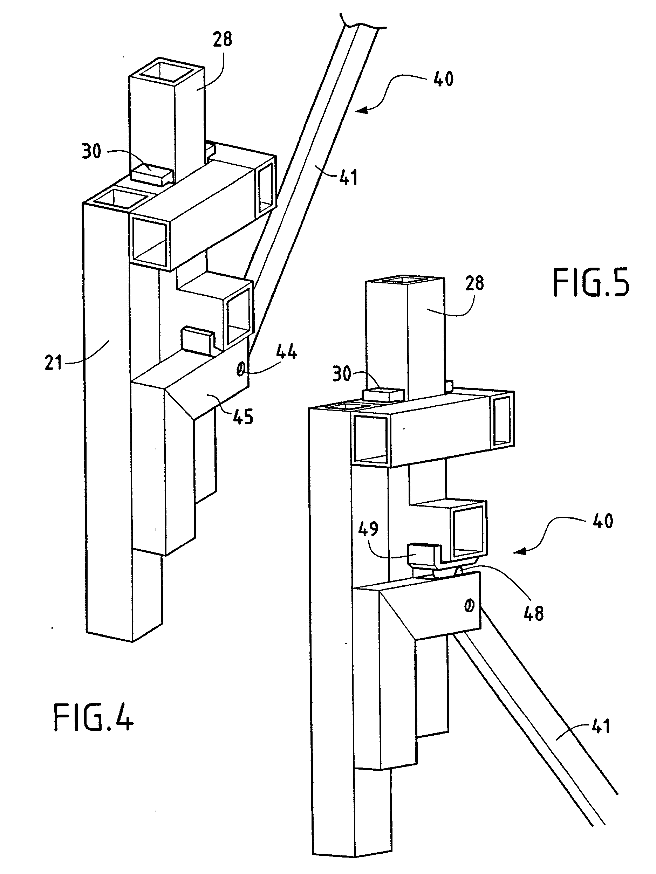

Selon une autre caractéristique de l'objet de l'invention, la paroi d'obturation **31** comporte une série d'orifices **37** reliés à une source de production d'air froid non représentée et dont le fonctionnement est piloté par des moyens de commande connus en soi. De préférence, les orifices **37** sont répartis sur la paroi d'obturation **31** pour déboucher, lors de la présence d'un chariot **4**, entre les plateaux-repas **2**, dans chacun des compartiments **13** et **14**. Par exemple, chaque orifice de sortie d'air **37** est relié à une source de production d'air froid par l'intermédiaire de tuyaux d'amenée **38** (**fig. 6-7**). De préférence, la source de production d'air froid est montée sur l'équipage mobile, c'est-à-dire, par exemple, sur le cadre support **26**. De préférence encore, la quantité de froid délivrée par les orifices **37** à l'intérieur des compartiments **13**, **14** tient compte de la différence de charge existant entre le compartiment chaud **14** et le compartiment froid **13**. Par exemple, les orifices **37**, débouchant dans le compartiment chaud **14**, présentent une section droite transversale supérieure à celle de ceux débouchant dans le compartiment froid **13**.

Selon une autre caractéristique de l'invention, l'équipage mobile **25** est équipé d'un moyen **40** assurant sa translation verticale permettant de placer l'équipage **25** dans une première position, dite inactive (**fig. 1** et **6**), autorisant l'amenée ou le retrait libre du chariot **4** par rapport au dispositif **3** et, dans une seconde position, dite active (**fig. 2** et **7**), assurant la mise en contact de chaque plaque de chauffage **33** avec le dessous du plateau-repas **2** associé.

Dans l'exemple de réalisation illustré plus particulièrement aux **fig. 4** et **5**, le moyen de déplacement **40** de l'équipage mobile **25** est constitué par un système à levier **41** comportant, par exemple, deux leviers **41** reliés chacun, à l'une de leurs extrémités, par une barre de manoeuvre **43** et articulés, à l'autre de leurs extrémités, sur un axe de pivotement **44** monté sur une chape **45** présentée par la structure porteuse **21**. L'extrémité de chaque levier articulé **42** est pourvue d'un rouleau d'appui **48** destiné à coopérer avec un patin **49** équipant chaque coulisse **28** de l'équipage mobile.

Tel que cela ressort plus précisément des **fig. 1, 4** et **6**, le système à levier est destiné à occuper une première position dans laquelle l'équipage mobile **25** est en position basse et la barre de manoeuvre **43** s'étend à un niveau supérieur par rapport au dessus du chariot **4** pour permettre le libre accès au dispositif **3** pour un chariot **4**. Lors de l'abaissement de la barre de manoeuvre **43**, chaque levier **41** agit sur la coulisse associée **28**, de manière à soulever l'équipage mobile **25**, en vue qu'il occupe une deuxième position dans laquelle la barre de manoeuvre **43** vient en appui sur la face arrière **5**_{**2**} du chariot, opposée à la face avant **5**_{**1**} munie de la porte d'accès **8**. Dans une telle position illustrée aux **fig. 2**, **5** et **7**, le chariot **4** se trouve ainsi verrouillé par rapport au dispositif fixe **3**, à l'aide de la barre de manoeuvre **43**. Il est à noter que l'effort exercé pour soulever l'équipage mobile **25** est faible, en raison du bras de levier important. De plus, les leviers **41** peuvent être associés à des ressorts de compensation non représentés.

La mise en oeuvre de l'installation **1** décrite ci-dessus découle directement de la description qui précède. En position haute ou inactive du moyen de déplacement **40**, le dispositif **3** est adapté pour accueillir un chariot dont les mets doivent être, dans un premier temps, maintenus au froid et, dans un second temps, subir, pour au moins certains, une mise en température. A cet effet, après ouverture de la porte d'accès **8**, un chariot **4** est engagé à l'intérieur du logement de réception **22** du dispositif **3** avec sa face avant **5**_{**1**} dirigée vers la plaque d'obturation **31**. Un tel déplacement du chariot **4** selon le sens de la flèche **f**_{**1**} permet d'amener le chariot en contact avec la paroi d'obturation **31**.

Tel que cela apparaît plus précisément à la **fig. 6,** chaque plaque chauffante **33** s'étend ainsi à l'intérieur du compartiment chaud **14** du chariot, en dessous d'un plateau-repas **2** et, plus précisément, de la partie chaude **18**. Dans cette position, la barre de manoeuvre **43** est abaissée, de manière à permettre une montée de l'équipage mobile **25** conduisant à la mise en contact de chaque plaque chauffante **33** avec le dessous ou la face inférieure d'un plateau-repas **2** (**fig. 7**). Il est à noter que, dans cette position, le chariot **4** se trouve verrouillé par rapport au dispositif fixe **3** par la présence de la barre de commande **43** s'étendant sur la paroi arrière du chariot **4**.

Après la mise en place du chariot **4** sur le dispositif de raccordement **3**, les moyens de commande peuvent être pilotés pour assurer le fonctionnement de la source de production d'un air froid qui se trouve injecté à l'intérieur des compartiments chaud **14** et froid **13** permettant de maintenir au froid les mets selon une durée déterminée. Il est à noter que les orifices **37** peuvent être aménagés de manière à souffler l'air froid sur la partie supérieure des plateaux-repas lorsque l'équipage mobile **25** occupe sa position haute ou active.

Lors de la mise en température des mets placés dans le compartiment chaud **14** du chariot, les plaques de chauffage **33** sont commandées en fonctionnement, de manière à assurer une élévation de température des mets contenus dans le compartiment chaud. Il est à noter que, compte tenu du contact réalisé entre le dessous de chaque plateau-repas **2** et la plaque chauffante **33** associée, il peut être obtenu une bonne conductibilité thermique pour le chauffage des mets. Après l'arrêt des plaques de chauffage **33**, la barre de manoeuvre **43** peut être soulevée de manière à abaisser l'équipage mobile **25**. Les plaques chauffantes **33** sont ainsi dégagées des plateaux-repas (**fig. 6**) autorisant le retrait du chariot **4** du dispositif fixe **3**.

L'installation **1** selon l'invention présente donc l'avantage de proposer un dispositif fixe **3** de conception simple, adapté pour permettre un raccordement facile pour un chariot **4** de transport de plateaux-repas. De plus, la mise un oeuvre d'un équipage mobile **25** sur le dispositif fixe **3** permet d'assurer un contact sûr entre les plaques chauffantes **33** et les plateaux-repas **2**. Il s'ensuit une bonne conductibilité thermique pour la mise en température des mets, évitant une déperdition thermique.

Dans l'exemple préféré de réalisation, dans lequel la cloison de séparation **11** divise l'enceinte **7** du chariot **4** en un compartiment chaud **14** et un compartiment froid **13**, il peut être obtenu une mise en température efficace des mets, tout en maintenant à une température froide les mets placés dans le compartiment froid **13**.

Pour améliorer l'étanchéité entre les compartiments chaud **14** et froid **13**, il peut être prévu d'équiper la paroi d'obturation **31** par l'intermédiaire d'un joint d'étanchéité **50** destiné à venir coopérer avec la paroi frontale **11**_{**1**} de la cloison de séparation **11**. Dans le même sens, il peut être envisagé d'équiper la paroi d'obturation **31** d'un joint périmétrique non représenté, destiné à coopérer avec la face avant du chariot délimitant l'enceinte **7**.

## Revendications

1. Dispositif pour le maintien au froid et la mise en température de mets placés sur des plateaux-repas (**2**), le dispositif (**3**) comportant :
• une structure porteuse (**21**) délimitant au moins un logement de réception (**22**) pour un chariot isotherme (**4**) comportant une enveloppe isolante (**5**) délimitant, intérieurement, une enceinte (**7**) accessible par au moins une porte (**8**) qui, en position ouverte, communique avec le logement (**22**), l'enceinte étant munie de moyens de support (**9**) permettant le maintien en position superposée, des plateaux-repas (**2**),
• une source de production d'un air froid, adaptée pour, en présence d'un chariot isotherme (**4**), maintenir au froid les mets placés dans l'enceinte,
• des plaques chauffantes (**33**) montées de manière superposée pour, en présence du chariot isotherme, mettre en température certains des mets placés dans l'enceinte,
• et des moyens de commande permettant de piloter le fonctionnement de la source de production d'air froid et des plaques chauffantes (**33**),
**caractérisé en ce que** la structure porteuse (**21**) supporte un équipage (**25**) mobile verticalement comportant une paroi d'obturation (**31**) destinée à fermer l'enceinte (**7**) du chariot isotherme et équipée :
• des plaques chauffantes (**33**) montées en porte-à-faux pour s'étendre dans l'enceinte du chariot,
• d'une série d'orifices (**37**) reliés à la source de production d'air froid, réparties sur la paroi de l'obturation pour déboucher entre les plateaux-repas dans l'enceinte,
• et d'un moyen (**40**) de déplacement de l'équipage mobile (**25**) permettant de le placer dans une première position autorisant l'amenée ou le retrait du chariot par rapport à la paroi d'obturation (**31**) et, dans une seconde position, assurant la mise en contact de chaque plaque chauffage (**33**) avec le dessous du plateau-repas (**2**) associé.

2. Dispositif selon la revendication 1, **caractérisé en ce que** le moyen de déplacement (**40**) de l'équipage mobile est constitué par un système à levier (**41**) qui, dans la seconde position, assure un verrouillage du chariot isotherme par rapport à la paroi de fermeture.

3. Dispositif selon la revendication 2, **caractérisé en ce que** le système à levier comporte deux leviers articulés (**41**) reliés chacun, à l'une de leur extrémité, par une barre de manoeuvre (**43**) destinée à venir en appui sur la face arrière (**5**_{**2**}) du chariot isotherme opposée de celle (**5**_{**1**}) munie de la porte d'accès (**8**).

4. Dispositif selon la revendication 3, **caractérisé en ce que** les leviers (**41**) sont montés articulés sur la structure porteuse (**21**), de manière que, dans la première position, la barre de manoeuvre (**43**) s'étende à un niveau supérieur par rapport au dessus du chariot pour permettre son amenée ou son retrait libre.

5. Dispositif selon la revendication 3 ou 4, **caractérisé en ce que** chaque levier (**41**) agit, par son extrémité opposée de celle reliée à la barre de manoeuvre (**43**), sur une coulisse (**28**) guidée en déplacement vertical par des glissières (**30**).

6. Dispositif selon la revendication 1, **caractérisé en ce que** la paroi d'obturation (**31**) comporte un joint d'étanchéité (**50**) destiné à coopérer avec la paroi frontale d'une cloison de séparation (**11**) montée à l'intérieur de l'enceinte (**7**) du chariot et délimitant, de part et d'autre, un compartiment froid (**13**) et un compartiment chaud (**14**).

7. Dispositif selon la revendication 1, **caractérisé en ce que** les orifices (**37**) sont reliés à la source de production d'air froid par l'intermédiaire de tuyaux d'amenée (**38**).

8. Dispositif selon les revendications 6 et 7, **caractérisé en ce que** les orifices (**37**), débouchant dans le compartiment chaud (**14**), présentent une section droite transversale supérieure à ceux débouchant dans le compartiment froid (**13**).

9. Dispositif selon la revendication 1 ou 7, **caractérisé en ce que** la source de production de froid est montée sur l'équipage mobile (**25**).

10. Dispositif selon la revendication 6, **caractérisé en ce que** la paroi d'obturation (**31**) comporte un joint d'étanchéité périmétrique destiné à coopérer avec la face avant (**5**_{**1**}) du chariot délimitant l'enceinte (**7**).

11. Installation pour le maintien du froid et la mise en température de mets placés sur des plateaux-repas (**2**) qu'elle comporte :
• au moins un dispositif (**3**) conforme à l'une des revendications 1 à 10,
• et au moins un chariot (**4**) isotherme comportant une enveloppe isolante (**5**) délimitant intérieurement une enceinte (**7**) accessible par au moins une porte (**8**) et munie de moyens de support (**9**) permettant le maintien en position superposée de plateaux-repas (**2**).

12. Installation selon la revendication 11, **caractérisée en ce que** le chariot isotherme (**4**) comporte une cloison de séparation (**11**) montée à l'intérieur de l'enceinte et délimitant, de part et d'autre, un compartiment froid (**13**) et un compartiment chaud (**14**), la cloison de séparation (**11**) comporte des logements superposés (**19**) adaptés pour recevoir chacun une partie de liaison (**16**) entre les parties chaude et froide d'un plateau-repas (**2**) placées, respectivement, dans les compartiments chaud et froid et s'étendant de part et d'autre d'une fente (**15**) engagée dans la cloison de séparation (**11**).

## Patentansprüche

1. Vorrichtung zum Kühlhalten und Erwärmen von auf Serviertabletts (2) gestellte Speisen, wobei die Vorrichtung (3) folgendes aufweist:
• eine Tragstruktur (21), die wenigstens einen Aufnahmeraum (22) für einen isothermen Wagen (4) mit einem isolierenden Gehäuse (5) begrenzt, das im Inneren einen Raum (7) begrenzt, der über wenigstens eine Tür (8) zugänglich ist, die in geöffneter Stellung mit der Aufnahme (22) in Verbindung steht, wobei der Raum mit Haltemitteln (9) versehen ist, die ermöglichen, die Serviertabletts (2) in übereinander angeordneter Position zu halten,
• eine Quelle zum Erzeugen kalter Luft, die geeignet ist, bei Vorhandensein eines isothermen Wagens (4) die in den Raum gestellten Speisen kühl zu halten,
• übereinander angeordnete Heizplatten (33), um bei Vorhandensein des isothermen Wagens einige der in den Raum gestellten Speisen zu erwärmen,
• und Steuermittel, die ermöglichen, den Betrieb der Quelle zum Erzeugen kalter Luft und der Heizplatten (33) zu steuern,
**dadurch gekennzeichnet, dass** die Tragstruktur (21) ein vertikal bewegliches Organ (25) trägt, das eine Verschlusswand (31) aufweist, welche den Raum (7) des isothermen Wagens verschließen soll und mit folgendem ausgestattet ist:
• Heizplatten (33), die vorragend angeordnet sind, um sich in den Raum des Wagens zu erstrecken,
• einer Reihe von Öffnungen (37), die mit der Quelle zum Erzeugen kalter Luft verbunden und über die Verschlusswand verteilt sind, um zwischen den Serviertabletts in den Raum zu münden,
• und einem Mittel (40) zum Bewegen des beweglichen Organs (25), das ermöglicht, es in eine erste Position zu bringen, die das Zuführen oder Zurückziehen des Wagens gegenüber der Verschlusswand (31) gestattet, sowie in eine zweite Position, die zulässt, jede Heizplatte (33) mit der Unterseite des zugeordneten Serviertabletts (2) in Kontakt zu bringen.

2. Vorrichtung nach Anspruch 1, **dadurch gekennzeichnet, dass** das Mittel (40) zum Bewegen des beweglichen Organs von einem Hebelsystem (41) gebildet ist, welches in der zweiten Position ein Verriegeln des isothermen Wagens gegenüber der Verschlusswand sicherstellt.

3. Vorrichtung nach Anspruch 2, **dadurch gekennzeichnet, dass** das Hebelsystem zwei gelenkige Hebel (41) aufweist, die jeweils an dem einen ihrer Enden über eine Betätigungsstange (43) verbunden sind, die an der Rückwand (5₂) des isothermen Wagens zur Anlage kommen soll, welche derjenigen (5₁) gegenüberliegt, die mit der Zugangstür (8) versehen ist.

4. Vorrichtung nach Anspruch 3, **dadurch gekennzeichnet, dass** die Hebel (41) an der Tragstruktur (21) gelenkig angebracht sind, so dass sich in der ersten Position die Betätigungsstange (43) in einer über der Oberseite des Wagens befindlichen Höhe erstreckt, um dessen ungehindertes Zuführen oder Zurückziehen zu ermöglichen.

5. Vorrichtung nach Anspruch 3 oder 4, **dadurch gekennzeichnet, dass** jeder Hebel (41) über sein Ende, welches dem mit der Betätigungsstange (43) verbundenen Ende gegenüberliegt, auf einen Schieber (28) wirkt, der durch Führungen (30) in senkrechter Bewegung geführt wird.

6. Vorrichtung nach Anspruch 1, **dadurch gekennzeichnet, dass** die Verschlusswand (31) eine Dichtung (50) aufweist, die mit der Stirnwand einer Trennwand (11) zusammenwirken soll, welche innerhalb des Raumes (7) des Wagens angebracht ist und auf beiden Seiten ein Kaltfach (13) und ein Warmfach (14) begrenzt.

7. Vorrichtung nach Anspruch 1, **dadurch gekennzeichnet, dass** die Öffnungen (37) über Zuführungsrohre (38) mit der Quelle zum Erzeugen kalter Luft verbunden sind.

8. Vorrichtung nach den Ansprüchen 6 und 7, **dadurch gekennzeichnet, dass** die Öffnungen (37), die in das Warmfach (14) münden, einen größeren Querschnitt aufweisen, als diejenigen, welche in das Kaltfach (13) münden.

9. Vorrichtung nach Anspruch 1 oder 7, **dadurch gekennzeichnet, dass** die Kälteerzeugungsquelle an dem beweglichen Organ (25) angebracht ist.

10. Vorrichtung nach Anspruch 6, **dadurch gekennzeichnet, dass** die Verschlusswand (31) eine Umfangsdichtung aufweist, die mit der den Raum (7) begrenzenden Vorderseite (5₁) des Wagens zusammenwirken soll.

11. Einrichtung zum Kühlhalten und Erwärmen von auf Serviertabletts (2) gestellte Speisen, mit:
• wenigstens einer Vorrichtung (3) nach einem der Ansprüche 1 bis 10,
• und wenigstens einem isothermen Wagen (4) mit einem isolierenden Gehäuse (5), das im Inneren einen Raum (7) begrenzt, der über wenigstens eine Tür (8) zugänglich und mit Haltemitteln (9) versehen ist, die ermöglichen, Serviertabletts (2) in übereinander angeordneter Position zu halten.

12. Einrichtung nach Anspruch 11, **dadurch gekennzeichnet, dass** der isotherme Wagen (4) eine Trennwand (11) aufweist, die im Inneren des Raumes angebracht ist und auf beiden Seiten ein Kaltfach (13) und ein Warmfach (14) begrenzt, die Trennwand (11) übereinander liegende Aufnahmen (19) aufweist, die angepasst sind, jeweils ein Verbindungsteil (16) zwischen dem warmen und dem kalten Teil eines Serviertabletts (2) aufzunehmen, die sich in dem Warmfach bzw. Kaltfach befinden und sich auf beiden Seiten eines in die Trennwand (11) eingeführten Schlitzes (15) erstrecken.

## Claims

1. A device for keeping under refrigeration and warming up dishes placed on meal trays (2), the device (3) including:
• a bearing structure (21) delimiting at least a receiving housing (22) for an isothermal trolley (4) including an insulating casing (5) delimiting inside an enclosure (7) accessible through at least one door (8) which, in the open position, communicates with the housing (22), the enclosure being provided with supporting means (9) allowing the meal trays (2) to be held in a superimposed position,
• a cold air producing source, suitable for, in the presence of the isothermal trolley (4), keeping under refrigeration, meals placed in the enclosure,
• superimposably mounted heating plates (33) for, in the presence of the isothermal trolley, warming up some of the meals placed in the enclosure,
• and control means allowing the operation of the cold air producing source and the heating plates (33) to be controlled,
**characterized in that** the bearing structure (21) supports a vertically mobile rig (25) including a closure wall (31) for closing the enclosure (7) of the isothermal trolley and provided with:
• cantilever-mounted heating plates (33) so as to extend within the enclosure of the trolley,
• a series of ports (37) connected to the cold air producing source, distributed over the closure wall so as to emerge between the meal trays within the enclosure,
• and with means (40) for displacing the mobile rig (25) allowing it to be placed in a first position allowing the trolley to be brought in or removed with respect to the closure wall (31) and, in a second position, providing the contacting of each heating plate (33) with the underside of the associated meal tray (2).

2. The device according to claim 1, **characterized in that** the means (40) for displacing the mobile rig is formed by a lever system (41) which in the second position, provides locking of the isothermal trolley with respect to the closure wall.

3. The device according to claim 2, **characterized in that** the lever system includes two articulated levers (41) each connected at one of their ends, by a maneuvering rod (43) to be pressed against the backside (5₂) of the isothermal trolley opposite to the one (5₁) provided with the access door (8).

4. The device according to claim 3, **characterized in that** the levers (41) are joint-mounted on the bearing structure (21) so that in the first position, the maneuvering rod (43) extends to an upper level with respect to the top of the trolley for allowing it to be brought in or freely removed.

5. The device according to claim 3 or 4, **characterized in that** each lever (41) acts, through its end opposite to the one connected to the maneuvering rod (43), on a slider (28) guided in a vertical displacement by slides (30).

6. The device according to claim 1, **characterized in that** the closure wall (31) includes a seal gasket (50) for cooperating with the front wall of a separating partition (11) mounted within the enclosure (7) of the trolley and delimiting a cold compartment (13) and a hot compartment (14) on both sides.

7. The device according to claim 1, **characterized in that** the ports (37) are connected with the cold air producing source via intake pipes (38).

8. The device according to claim 6 or 7, **characterized in that** the ports (37) emerging in the hot compartment (14), have a larger transverse cross-section than those emerging into the cold compartment (13).

9. The device according to claim 1 or 7, **characterized in that** the cold producing source is mounted on the mobile rig (25).

10. The device according to claim 6, **characterized in that** the closure wall (31) includes a perimetric seal gasket for cooperating with the front side (5₁) of the trolley delimiting the enclosure (7).

11. A facility for keeping under refrigeration and warming up dishes placed on meal trays (2) including:
• at least one device (3) according to any of claims 1 to 10,
• and at least one isothermal trolley (4) including an insulating casing (5) delimiting inside an enclosure (7) accessible through at least one door (8) and provided with supporting means (9) allowing the meal trays (2) to be held in a superimposed position.

12. The facility according to claim 11, **characterized in that** the isothermal trolley (4) includes a separating partition (11) mounted within the enclosure and delimiting a cold compartment (13) and a hot compartment (14) on both sides, the separating partition (11) includes superimposed housings (19) each suitable for receiving a linking portion (16) between the hot and cold portions of a meal tray (2) placed in the hot and cold compartments respectively, and extending on both sides of a slot (15) engaged into the separating partition (11).
